# EUROPÄISCHE PATENTSCHRIFT

(11) **EP 1 108 646 B1**
(45) Veröffentlichungstag und Bekanntmachung des Hinweises auf die Patenterteilung: **05.10.2005**
(21) Anmeldenummer: 00125082.8
(22) Anmeldetag: 17.11.2000
(51) Int. Cl.: B64C 1/00, B22D 25/02

(54) **Strukturbauteil**
Structural component
Elément de structure

(30) Priorität: 16.12.1999 DE 19960734; 16.03.2000 DE 10012906
(43) Veröffentlichungstag der Anmeldung: 20.06.2001
(73) Patentinhaber: Airbus Deutschland GmbH, 21129 Hamburg (DE)
(72) Erfinder: Entelmann, Wolfgang, Dipl.-Ing., 28865 Lilienthal (DE); Mester, Otto, Dipl.-Ing., 27729 Axstedt (DE); Karnath, Ulf, Dipl.-Ing., 25469 Halstenbek (DE)
(74) Vertreter: Hansmann, Dierk

(56) Entgegenhaltungen:
- DE-A- 4 446 153
- US-A- 4 720 065
- US-A- 4 725 334
- US-A- 4 965 138
- US-A- 5 221 377
- US-A- 5 262 220
- US-A- 5 529 645
- US-A- 5 618 633

## Beschreibung

Die Erfindung betrifft ein Strukturbauteil, insbesondere für die Anwendung in Luftfahrtstrukturen, wobei im wesentlichen ein großflächiges Hautfeld vorgesehen ist, welches Versteifungselemente aufweist.

Derzeit ist es üblich, großflächige tragende Bauteile für die Struktur eines Luftfahrzeuges mittels Niettechnik bzw. zum Teil auch mittels Klebetechnik herzustellen. Solche Bauteile sind beispielsweise aus DE 34 38 584 bekannt. Hierbei ist der Fertigungsaufwand erheblich, da für das Herstellen von großflächigen Primärstrukturbauteilen eine große Anzahl von Nieten gesetzt werden muß. Für das Verfahren Nieten sind viele Arbeitschritte wie Bohren, Dichtmittelsetzen und Nietzuführen und das Nietsetzen notwendig. Ein Primärstrukturbauteil, wie beispielsweise ein innendruckbelastbares Flugzeugrumpfbauteil, ist zudem meist in Dif-ferentialbauweise ausgeführt und mit Versteifungselementen sowie Anschlußelementen ausgestattet, was den Herstellungsaufwand ebenfalls erhöht.

Weiterhin ist es nachteilig, daß aufgrund des verwendeten Materials und der notwendigen Versteifungen ein hohes Bauteilgewicht entsteht, deren Verringerung eine immerwährende Forderung im Flugzeugbau darstellt.

Aus US-A-5 529 645 ist ein dünnwandiges Gussbauteil bekannt, welches Versteifungselemente aufweist. Diese Versteifungselemente bilden Rippen oder ein Waffelmuster mit einer einheitlichen Höhe. Ziel dieser Lösung ist es, die Wanddicken von normalen Gussbauteilen um 20 bis 40% zu verringern, wobei die technischen Eigenschaften Steifheit, Biegewiderstand, Lastaufnahme gegenüber konventionellen Gussbauteilen verbessert sind.

Um jedoch ein derartiges Gussbauteil auch als Strukturbauteil in Luftfahrtanwendungen einzusetzen, sind spezielle Maßnahmen notwendig, um eine integrale Bauweise in Gusstechnik auch großflächig (für eine Flugzeugtür mehrere Quadratmeter) und ausreichend steif für den Einsatz im druckbelüfteten Flugzeugrumpf zu erreichen.

US-4 725 334 beschreibt ebenfalls eine versteifte Hautstruktur, wobei die Versteifungselemente unterschiedliche Höhe (primary and secondary ribs) aufweisen können. Es ist hier zwar eine Integralstruktur gezeigt, sie wird jedoch durch chemisches Abtragen hergestellt.

Der Erfindung liegt daher die Aufgabe zugrunde, ein gattungsgemäßes Strukturbauteil derart auszubilden, das eine hohe Belastbarkeit gegen die dimensionierenden Lasten des Flugzeuges sowie gegenüber heutigen Bauteilen eine Gewichtsreduzierung erreicht wird und der Fertigungsaufwand zur Herstellung solcher Flugzeugbauteile verringert werden kann.

Diese Aufgabe wird bei einem gattungsgemäßen Strukturbauteil mit den im Patentanspruch 1 genannten Maßnahmen gelöst.

Dabei ist insbesondere von Vorteil, daß mit dem erfindungsgemäßen Strukturbauteil eine höhere Steifigkeit als mit vergleichbaren Differentialstrukturen erreicht werden kann. Auch können der Herstellaufwand sowie das Gewicht von einem solchen Bauteil erheblich gesenkt werden.

Weiterbildungen und vorteilhafte Ausgestaltungen sind in den Unteransprüchen 2 bis 14 angegeben.

Mit der Ausbildung des Strukturbauteils gemäß Anspruch 2 und 3 ist erreicht, daß großflächige Flugzeugbauteile, insbesondere unter Innendruck stehende Teile derart ausgebildet werden können.

Die Maßnahmen gemäß Anspruch 4 zeigen Möglichkeiten zur Erhöhung der Steifigkeit des erfindungsgemäßen Strukturbauteils auf. Zur Gewichtsreduzierung ist die Maßnahme nach Anspruch 5 vorgesehen.

Mit der Ausbildung des Strukturbauteils nach Anspruch 6 ist vorteilhaft erreicht, daß keine weiteren Strukturverstärkungen in das Bauteil eingebracht werden müssen und somit eine Gewichtsreduzierung ermöglicht ist.

Die Maßnahmen gemäß der Ansprüche 7, 8 und 9 zeigen Altemativen zur konkreten Ausgestaltung einer Verstärkungsstruktur, die gusstechnisch ausgelegt werden kann. Es ist damit ein hoher Symmetrieanteil um mehrere Achsen erreicht, der eine wirtschaftliche Fertigung der Gießwerkzeuge ermöglicht.

Die Ausbildung gemäß Anspruch 10 zeigt eine weitere alternative Ausführung einer Verstärkungsstruktur.

Mit den Maßnahmen der Ansprüche 11 und 12 ist ein Einsatz des Strukturbauteils als Flugzeugbauteil sowie eine Integration von notwendigen Ausrüstungen in das Bauteil erreicht.

Die Ansprüche 13 und 14 zeigen mögliche Ausbildungen mittels unterschiedlicher Herstellverfahren sowie eine Materialauswahl für ein Strukturbauteil.

Im.Anspruch 15 ist eine bevorzugte Verwendung angegeben.

In der Zeichnung sind Ausführungsbeispiele der Erfindung dargestellt, die nachstehend anhand der Figuren 1 bis 11 näher beschrieben sind. In den Figuren sind gleiche Bauteile mit gleichen Bezugszeichen versehen.

Die Zeichnung zeigt im einzelnen:
- Fig. 1: einen Strukturbauteilbereich in einer ersten Ausführungsform mit Versteifungselementen als Gussbautell,
- Fig. 2: das Strukturbauteil gemäß Fig. 1 in der Anwendung für eine Flugzeugtür in einer Perspektivdarstellung,
- Fig. 3: die Flugzeugtür in einer Ansicht von vom mit Blick auf die Innenhaut,
- Fig. 4: eine Seitenansicht der Flugzeugtür,
- Fig. 5: eine vergrößerte Darstellung des Strukturbauteils in der ersten Ausführungsform,
- Fign. 6 bis 8: Detaildarstellungen von in die Flugzeugtür integrierten Hebelgehäuse und Fensterrahmen,
- Fig. 9: ein Strukturbauteilbereich als Gussbauteil in einer zweiten Ausführungsform,
- Fig. 10: das Strukturbauteil gemäß Fig. 9 in einer Ansicht von vorn in der Anwendung für eine Flugzeugtür und
- Fig. 11: eine vergrößerte Detailansicht des Strukturbauteils in der zweiten Ausführungsform.

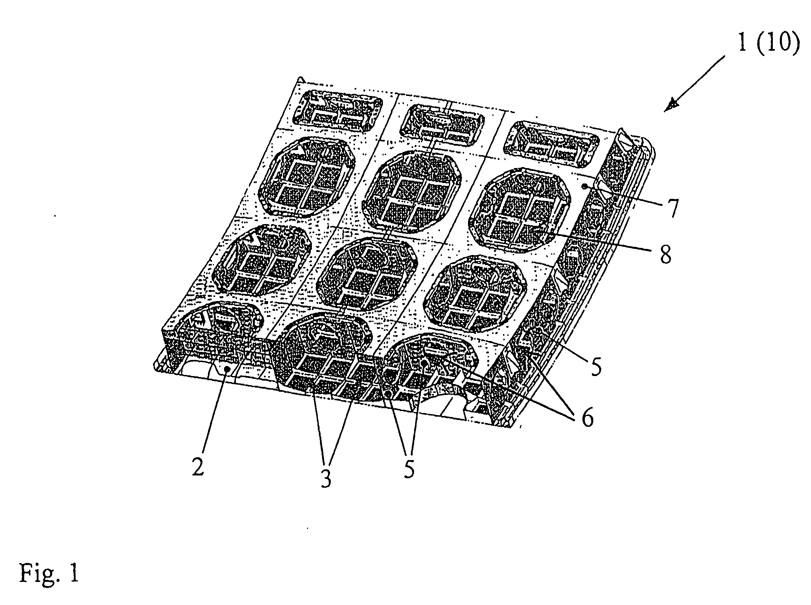

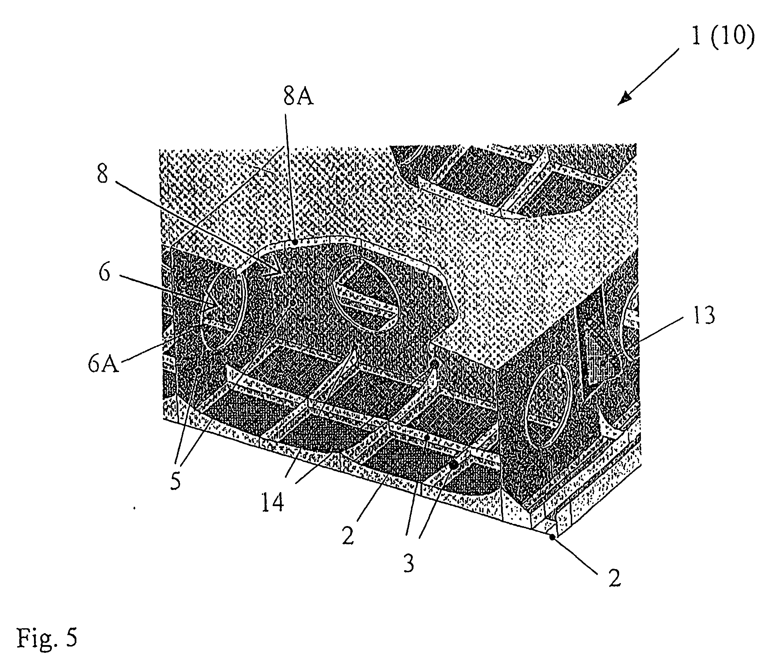

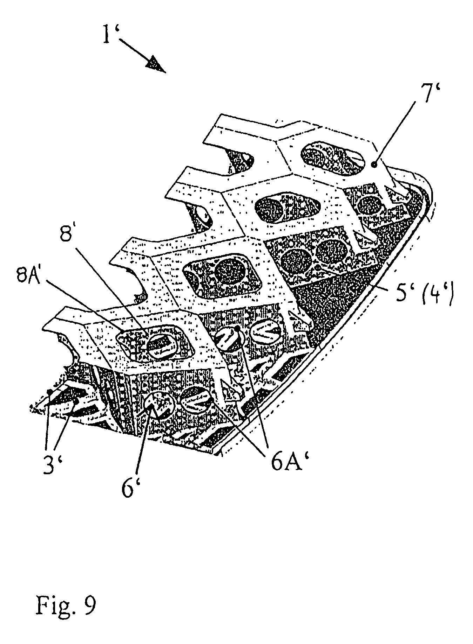

In Fig. 1 ist ein Strukturbauteil 1 ersichtlich, welches insbesondere für die Anwendung in Luftfahrtstrukturen als innendruckbelastbares Bauteil geeignet ist. Es ist im wesentlichen ein großflächiges, leicht gekrümmtes Hautfeld 2 (als Außenhaut) vorgesehen, welches im Inneren Hautfeldversteifungselemente 3 sowie Strukturversteifungselemente aufweist. Die Versteifungselemente 3 sind in der ersten Ausführungsform rechteckförmig auf dem Hautfeld 2 angeordnet. In einer zweiten Ausführungsform, die später noch ausführlicher beschrieben und in Fig. 9 gezeigt wird, sind die Versteifungselemente (3') wabenförmig auf dem Hautfeld (2') angeordnet. Die Hautfeldversteifungen 3 (3') sind notwendig, um die Deformationen infolge radialer Belastung zu verringern. Die Versteifungen können beispielsweise als einfache Stege ohne Flansche ausgeführt und in ihrer Höhe den Steifigkeitserfordernissen angepasst werden.
Die Strukturversteifungselemente sind mittels Versteifungsrippen 5 gebildet, die in einem größeren Abstand als die Hautfeldversteifungen 3 rechtwinklig zueinander angeordnet sind. Sie stehen senkrecht auf dem Hautfeld 2 und ergeben so rechteckförmige Versteifungen. In den Rippenelementen 5 können zur Gewichtsreduzierung Aussparungen 6 vorgesehen sein. Auf den Versteifungsrippen 5 kann eine im wesentlichen parallel zum ersten Hautfeld (Außenhaut) 2 verlaufende Innenhaut 7 angeordnet sein. Die Innenhaut 7 weist ebenfalls Aussparungen 8 auf, die für die Zugänglichkeit sowie als eine gewichtsmindernde Maßnahme notwendig sind. Die Ränder der Aussparungen 6 und 8 können geeignet verstärkt werden. In Fig. 5 sind in einer Detailansicht weitere Einzelheiten des Strukturbauteils 1 in einer ersten Ausführungsform gezeigt. Ein solches Strukturbauteil 1 ist als Gussbauteil ausgeführt. Als bevorzugte Verfahren sind für die Herstellung eines großflächigen Strukturbauteils 1 das Sand- und das Feingussverfahren vorgesehen. Als Material können Leichtmetall-Legierungen (Al, Mg, Ti) verwendet werden.

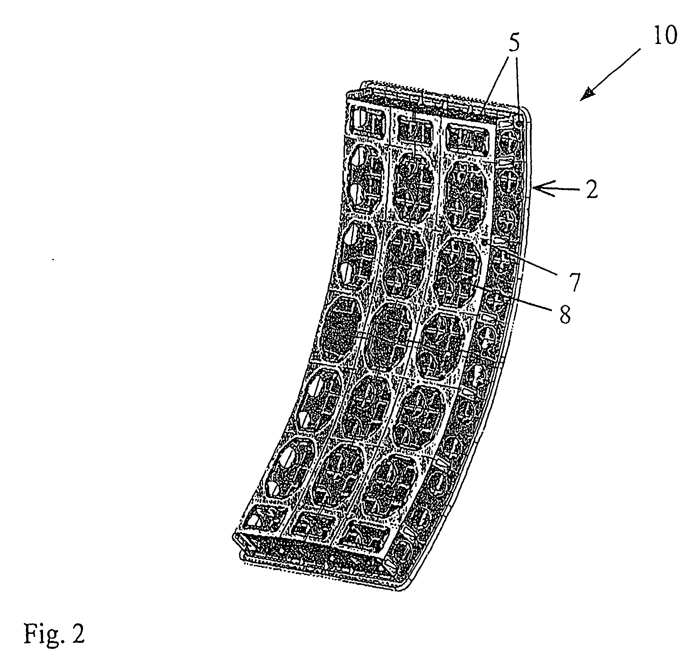

In der Fig. 2 ist ein erfindungsgemäßes großflächiges Strukturbauteil 1 in der Anwendung als Passagiertür 10 eines Flugzeuges in Perspektivdarstellung gezeigt. Eine Anwendung als Flugzeugpassagiertür 10 ist vorteilhaft, da mittels der Versteifungselemente 3 und 5 eine homogene Strukturversteifung erreicht wird. Eine solche Anordnung ist optimal für den Kraftfluß im Bauteil. Dies ist insbesondere im Bereich des Übergangs Türstruktur / Türrahmen von Bedeutung. Auch können aufgrund der regelmäßigen, rechteckförmigen Versteifungsstruktur weitere Einrichtungen, wie beispielweise eine Öffnungsmechanik, eine Notrutsche, Aktuatoren und Motoren einfach in die Flugzeugtür 10 integriert werden. Zusätzlich bietet die Gußtechnik die Möglichkeit, weitere funktionale Bestandteile bzw. Einzelteile in das Gußteil zu integrieren.

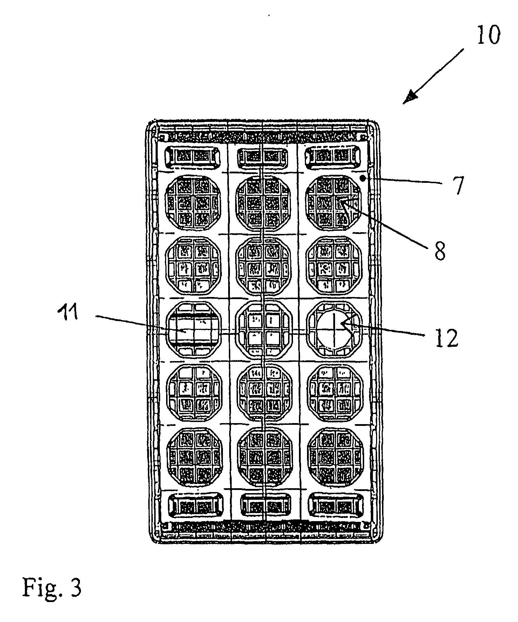

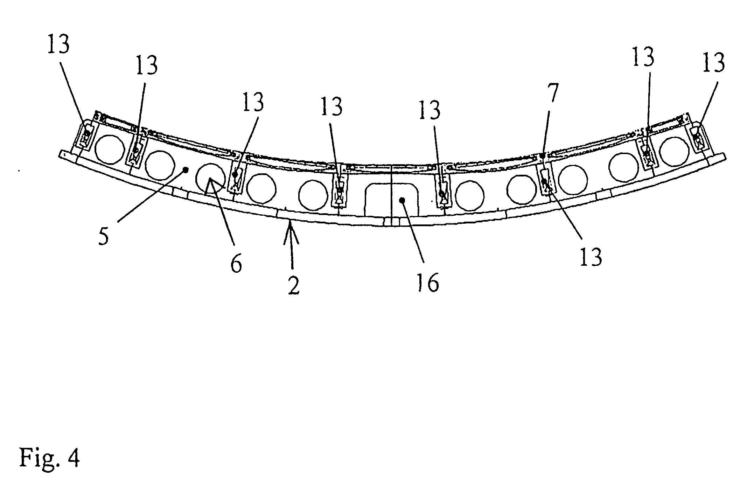

Die Flugzeugtür 10 ist in den Figuren 3 und 4 in weiteren Ansichten ersichtlich. In der Fig. 3 ist die Flugzeugtür 10 in einer Draufsicht mit Blick auf die Innenhaut 7 gezeigt. Durch die rechteckförmige, regelmäßige Anordnung der Versteifungselemente 3 und 5 können Anbauteile (Lager, Halter) auf einfache Weise mit dem Gußteil verbunden werden und im Reparaturfalle auch ausgetauscht werden. Weiterhin sind Aussparungen 11 und 12 in diesem Bauteil zum einen für ein Fenster und zum anderen für den Öffnungsmechanismus der Tür 10 vorgesehen.

In Fig. 4 ist eine Seitenansicht der Passagiertür 10 gezeigt. Es sind das leicht konvex gekrürpmte Hautfeld 2 der Außenhaut sowie die Versteifungsrippen 5 ersichtlich, die vorzugsweise im wesentlichen senkrecht auf dem Hautfeld 2 angeordnet sind. Die Höhe, Dimensionierung und die Anordnung der Versteifungsrippen 5 sowie das Vorsehen von Lasteinleitungspunkten 13, in anderen Worten die Auslegung des Strukturbauteils 1, sind abhängig von deren Belastung sowie deren Anbindung an die Gesamtstruktur, d.h. beispielsweise an den Flugzeugrumpf und können nach üblichen Methoden, beispielsweise mittels der Finiten-Elemente-Methode berechnet werden.

In Fig. 5 sind Einzelheiten des Strukturbauteils 1 in einer vergrößerten Detailansicht ersichtlich. Die rechteckförmig, senkrecht auf dem Hautfeld 2 angeordneten Hautfeldversteifungen 3 und die Struktur-Versteifungsrippen 5 sind erkennbar. Aufgrund einergusstechnischen Auslegung des Strukturbauteils 1 ist ersichtlich, daß an den Anschlußpunkten zwischen den Verstärkungsrippen 5 und den Hautfeldversteifungen 3 (beispielhaft mit Bezugszeichen 14 gezeigt) Übergangsradien vorzusehen sind. Die Wandstärken der einzelnen Elemente des Strukturbauteils 1 können in Guß optimal gestaltet werden und für die Bereiche des Strukturbauteils 1 mit geringeren Belastungen werden sie auf das gusstechnisch mögliche Minimum reduziert. Für die Außenhaut 2 ist in einer bevorzugten Ausgestaltung eine Wanddicke von 1,5 mm vorgesehen. Für Bereiche mit höherer Belastung werden zum Erzielen einer ausreichenden Belastbarkeit die Wandstärken entsprechend erhöht. So ist an den Anschlußbereichen vom Hautfeld 2 zu den Hautfeldversteifungen 3 eine Verdickung bis 2 mm vorgesehen. Am primären Lasteinleitungspunkt 13 entstehen Wandstärken bis zu 8 mm. Zum Erzielen einer Gewichtsreduzierung der Passagiertür 10 sind die Aussparungen 6 in den Versteifungsrippen 5 und die Aussparungen 8 in der In nenhaut 7 so groß wie möglich gestaltet und die Ränder 6A bzw. 8A der Aussparungen 6 bzw. 8 gegebenenfalls versteift, d.h. an dieser Stelle die Wandstärken vergrößert.

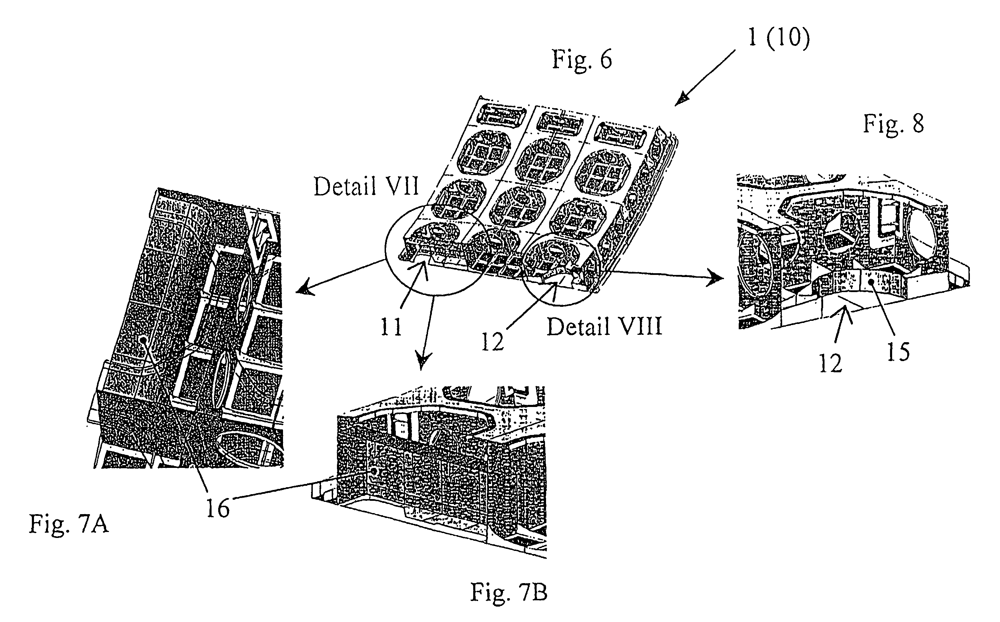

In den Fign. 6 bis 8 sind im Detail die für eine Flugzeugpassagiertür 10 notwendigen Maßnahmen zur Integration des Öffnungsmechanismusses in die Gußstruktur 1 sowie zur Integration eines Rahmens eines Fensters ersichtlich.
Fig. 6 zeigt die Bereiche VII sowie VIII, in denen eine Integration erfolgen soll und die Aussparung 12 für das Fenster und die Aussparung 11 für einen Hebel des Öffnungsmechanismuses ersichtlich ist,
In den Fig. 7A und 7B ist erkennbar, daß neben der Aussparung 11 in der Außenhaut 2 für den Öffnungshebel auch ein Gehäuse 16 in die Gußstruktur 1 integriert wird. Das Gehäuse 16 für den Öffnungshebel ist vorzugsweise in seiner Längsausdehnung horizontal in die Flugzeugtür 10 eingebracht, da mit dieser Ausrichtung eine höhere Steifigkeit gegen die Durchbiegung der Tür 10 gewährleistet wird.
In der Fig. 8 ist ein vergrößerter Ausschnitt des Bereichs VIII ersichtlich, der die Aussparung 12 für ein Fenster in der Flugzeugtür 10 zeigt. Die Aussparung 12 ist mit einem Rahmen 15 versehen, der - so wie auch das Gehäuse 16 - in die vorhandene Hautfeld- bzw. Rippenversteifungsstruktur 3 bzw. 5 nach gießtechnischen Prinzipien integriert ist.

Ein Strukturbauteil 1' in einer zweiten Ausführungsform ist ausschnittsweise in der Fig. 9 gezeigt. Ein solches Strukturbauteil 1' ist mit einer wabenförmigen Versteifungsstruktur vorgesehen. Die Strukturversteifungselemente (Versteifungsrippen) 5' und Hautfeldversteifungselemente 3' sind hier hexagonal angeordnet, was in bezug auf die Lasteinleitung in dieses Bauteil 1' vorteilhaft ist.

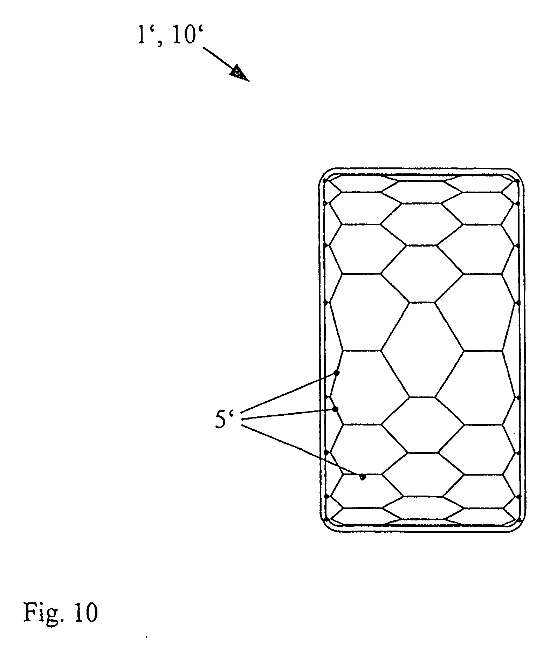

In der nachfolgenden Fig. 10 ist eine Flugzeugtür 10' gezeigt, die nach den Prinzipien einer gusstechnisch ausgelegten, mit hexagonalen Versteifungselementen (Versteifungsrippen 5') versehenen Struktur 1' gestaltet ist. Ersichtlich ist eine "verzerrte" Wabenstruktur, deren Struktur angepaßt ist an eine optimierte Lasteinleitung. Die Größe der durch die Versteifungsrippen 5' gebildeten Waben wird angepaßt an die in die Struktur eingeleiteten Lasten.

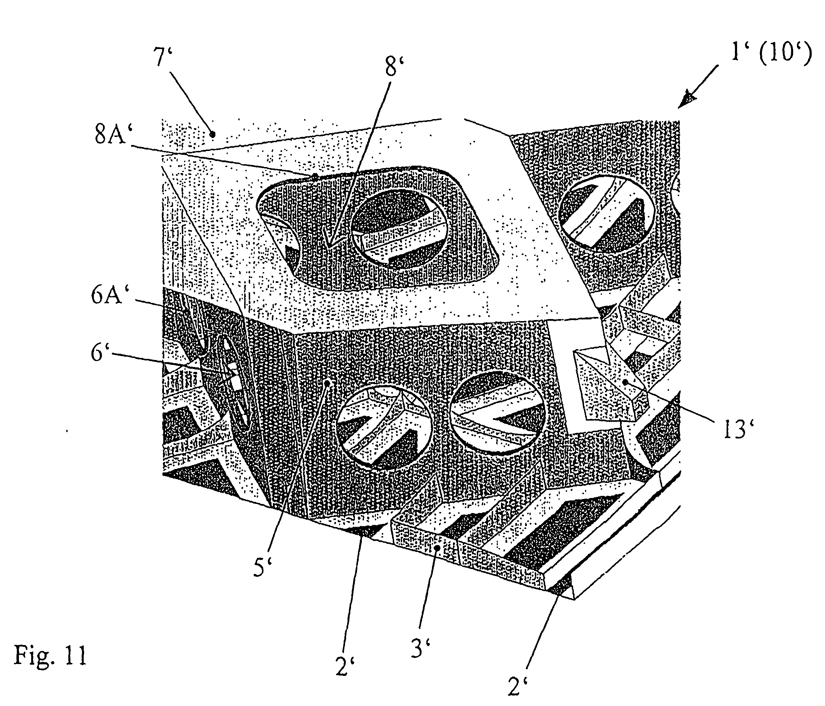

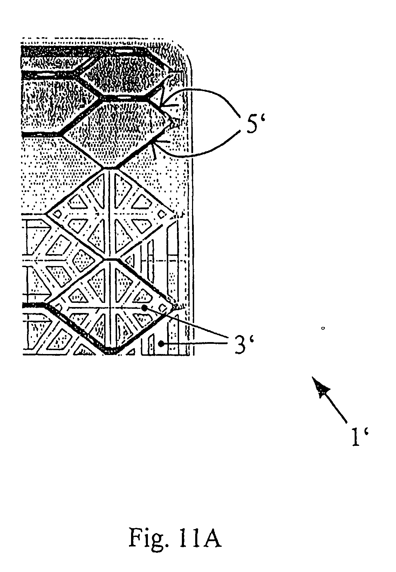

Im Detail ist das Strukturbauteil 1' bzw. 10' In der Fig. 11 gezeigt. Hier sind Hautfeldversteifungselemente 3' ersichtlich, die zur Versteifung der Außenhaut 2' vorgesehen sind. Eine beispielhafte Anordnung der Hautfeldversteifungselemente 3' ist der Fig. 11A zu entnehmen. Wesentlich ist für eine vorteilhafte Anordnung, daß der Kraftfluß im Bauteil optimiert und ein hoher Symmetrieanteil erreicht wird, um unter anderem die Herstellung des Strukturbauteils 1' bzw. 10' fertigungstechnisch günstig durchführen zu können.
Das Strukturbauteil 1' ist weiterhin mit die Versteifungselemente bildenden Versteifungsrippen 5' ausgestattet, die eine hexagonale oder auch eine rhombenförrnige Anordnung bilden. Zur Gewichtsreduzierung sind wie schon im ersten Ausführungsbeispiel ebenfalls Aussparungen 6' bzw. 8' in den Versteifungsrippen 5' bzw. der Innenhaut 7' vorgesehen. Vorzugsweise können die Ränder der Aussparungen 6' und 8' auch Versteifungen 6'A und 8'A aufweisen.

In einer weiteren Ausführungsform (nicht dargestellt) ist es auch möglich, eine regelmäßige Wabenstruktur als flächige Versteifungsstruktur für das Hautfeld vorzusehen. Möglich sind auch andere geometrische Anordnungen von Hautfeldversteifungselementen und Strukturversteifungselementen, um eine flächige Versteifungsstruktur zu erzeugen. Wesentlich dabei ist, daß die gusstechnische Auslegung an die vorgegebenen Lastverläufe und Randbedingungen angepaßt und in einem Bauteil integriert werden kann.

### Bezugszeichen

- 1, 1' -: Strukturbauteil
- 2, 2' -: Hautfeld
- 3, 3' -: Hautfeldversteifungselemente
- 5, 5' -: Versteifungsrippen
- 6, 6' -: Aussparungen in Rippen 5, 5'
- 6A, 6A' -: Lochrandverstärkung, Versteifung der Aussparung 6
- 7, 7' -: Innenhaut
- 8, 8' -: Aussparungen in Innenhaut
- 8A, 8A' -: Versteifung der Aussparung 8
- 10, 10' -: Passagiertür
- 11 -: Aussparung in der Tür für die Öffnungsmechanik
- 12 -: Aussparung in der Tür für das Fenster
- 13, 13' -: Lasteinleitungspunkt
- 14 -: Anschlußpunkt zwischen Hautfeldversteifung und Rippen
- 15 -: Fensterrahmen
- 16 -: Gehäuse

## Patentansprüche

1. Strukturbauteil (1, 1') für die Anwendung in Luftfahrtstrukturen, wobei ein großflächiges Hautfeld (2, 2') vorgesehen ist, welches Versteifungselemente (3, 5; 3', 5') aufweist und aus einer großflächigen Gußstruktur gebildet ist, **dadurch gekennzeichnet, dass** die Versteifungselemente als Hautfeldversteifungselemente (3, 3') und Strukturversteifungselemente (5, 5') ausgebildet sind, wobei die Hautfeldversteifungselemente (3, 3') eine erste Versteifungsstruktur sowie die Strukturversteifungselemente (5, 5') eine zweite Versteifungsstruktur bilden und eine Innenhaut (7, 7') auf der zweiten Versteifungsstruktur (5, 5') angeordnet ist und die Hautfeldversteifungselemente (3, 3') eine niedrigere Höhe als die Strukturversteifungselemente (5, 5') aufweisen .

2. Strukturbauteil nach Anspruch 1,
**dadurch gekennzeichnet, daß**
das großflächige Hautfeld (2, 2') eine Außenhaut bildet.

3. Strukturbauteil nach einem der Ansprüche 1 oder 2,
**dadurch gekennzeichnet, daß**
das Strukturbauteil (1, 1') eine leicht konvex gekrümmte Form aufweist, die dem Krümmungsradius eines Flugzeugrumpfes entspricht und als innendruckbelastbares Flugzeugbauteil (10) einsetzbar ist.

4. Strukturbauteil nach einem der Ansprüche 1 bis 3,
**dadurch gekennzeichnet, daß**
als Strukturversteifungselemente (5, 5') Versteifungsrippen vorgesehen sind.

5. Strukturbauteil nach einem der Ansprüche 1 bis 4,
**dadurch gekennzeichnet, daß**
in den Versteifungsrippen (5, 5') und/oder der Innenhaut (7, 7') Aussparungen (6, 8; 6', 8') vorgesehen sind.

6. Strukturbauteil nach Anspruch 5,
**dadurch gekennzeichnet, daß**
an den Rändern der Aussparungen (6, 8; 6', 8') Versteifungsmittel (6A, 8A; 6A', 8A') angeordnet sind.

7. Strukturbauteil nach einem der Ansprüche 1 bis 6,
**dadurch gekennzeichnet, daß**
die Versteifungselemente (3, 5; 3', 5') auf dem Hautfeld (2) in der Weise angeordnet sind, daß sie regelmäßig angeordnete Rechtecke ergeben, die eine Rechteckstruktur bilden.

8. Strukturbauteil nach einem der Ansprüche 1 bis 6,
**dadurch gekennzeichnet, daß**
die Versteifungselemente (3, 5; 3', 5') auf dem Hautfeld (2) in der Weise angeordnet sind, daß sie mehrere nebeneinander angeordnete hexagonale Flächen ergeben, die eine Wabenstruktur bilden.

9. Strukturbauteil nach einem der Ansprüche 1 bis 6,
**dadurch gekennzeichnet, daß**
die Versteifungselemente (3, 5; 3', 5') auf dem Hautfeld (2) in der Weise angeordnet sind, daß sie nebeneinander angeordnete Vierecke ergeben, die eine Rautenstruktur bilden.

10. Strukturbauteil nach einem der Ansprüche 1 bis 6,
**dadurch gekennzeichnet, daß**
die Versteifungselemente (3, 5; 3', 5') auf dem Hautfeld (2) in der Weise angeordnet sind, daß sie nebeneinander angeordnete Vielecke ergeben.

11. Strukturbauteil nach einem der Ansprüche 1 bis 10,
**dadurch gekennzeichnet, daß**
die Versteifungsstruktur (3, 5; 3', 5') im Bereich des Außenrandes des Strukturbauteils (1) Lasteinleitungspunkte (13) umfaßt.

12. Strukturbauteil nach einem der Ansprüche 1 bis 11,
**dadurch gekennzeichnet, daß**
in der Gussstruktur (1, 1') mindestens eine Aussparung (11, 12) und / oder mindestens ein Gehäuse (16) für weitere Bauteile vorgesehen ist.

13. Strukturbauteil nach einem der Ansprüche 1 bis 12,
**dadurch gekennzeichnet, daß**
die Gussstruktur (1, 1') als ein Sand-, Fein- oder Druckgussbauteil ausgebildet ist.

14. Strukturbauteil nach einem der vorangegangenen Ansprüche,
**dadurch gekennzeichnet, daß**
die Gussstruktur (1, 1') aus einer Leichtmetall-Legierung besteht.

15. Verwendung eines Strukturbauteiles nach einem der vorangegangenen Ansprüche für eine Primärstruktur eines Flugzeugrumpfes, wie beispielsweise eine Flugzeugtür (10), eine Zugangsklappe oder ein Frachttor.

## Claims

1. Structural component (1, 1') for use in aeronautical structures, wherein a skin panel (2, 2') of large area is provided, which has stiffening elements (3, 5; 3', 5') and is formed from a cast structure of large area,
**characterised in that**
the stiffening elements are constructed as skin panel-stiffening elements (3, 3') and structure-stiffening elements (5, 5'), said skin panel-stiffening elements (3, 3') forming a first stiffening structure and said structure-stiffening elements (5, 5') forming a second stiffening structure and an inner skin (7, 7') being disposed on said second stiffening structure (5, 5') and said skin panel-stiffening elements (3, 3') having a lower height than said structure-stiffening elements (5, 5').

2. Structural component according to claim 1,
**characterised in that**
the skin panel (2, 2') of large area forms an outer skin.

3. Structural component according to one of claims 1 or 2,
**characterised in that**
said structural component (1, 1') has a slightly convexly curved shape which corresponds to the radius of curvature of an aircraft fuselage and can be used as an aircraft component (10) which is capable of bearing internal pressure.

4. Structural component according to one of claims 1 to 3,
**characterised in that**
stiffening ribs are provided as the structure-stiffening elements (5, 5').

5. Structural component according to one of claims 1 to 4,
**characterised in that**
clearances (6, 8; 6', 8') are provided in the stiffening ribs (5, 5') and/or the inner skin (7, 7').

6. Structural component according to claim 5,
**characterised in that**
stiffening means (6A, 8A; 6A', 8A') are disposed at the edges of the clearances (6, 8; 6', 8').

7. Structural component according to one of claims 1 to 6,
**characterised in that**
the stiffening elements (3, 5; 3', 5') are disposed on the skin panel (2) in such a way that they produce rectangles which are disposed in a regular manner and which form a rectangular structure.

8. Structural component according to one of claims 1 to 6,
**characterised in that**
the stiffening elements (3, 5; 3', 5') are disposed on the skin panel (2) in such a way that they produce a number of hexagonal faces which are disposed side by side and which form a honeycomb structure.

9. Structural component according to one of claims 1 to 6,
**characterised in that**
the stiffening elements (3, 5; 3', 5') are disposed on the skin panel (2) in such a way that they produce quadrangles which are disposed side by side and which form a rhombic structure.

10. Structural component according to one of claims 1 to 6,
**characterised in that**
the stiffening elements (3, 5; 3', 5') are disposed on the skin panel (2) in such a way that they produce polygons which are disposed side by side.

11. Structural component according to one of claims 1 to 10,
**characterised in that**
the stiffening structure (3, 5; 3', 5') comprises load-introducing points (13) in the region of the outer edge of said structural component (1).

12. Structural component according to one of claims 1 to 11,
**characterised in that**
at least one clearance (11, 12) and/or at least one housing (16) for further components is provided in the cast structure (1, 1').

13. Structural component according to one of claims 1 to 12,
**characterised in that**
the cast structure (1, 1') is constructed as a sand-cast, precision-cast or die-cast component.

14. Structural component according to one of the preceding claims,
**characterised in that**
the cast structure (1, 1') consists of a light-metal alloy.

15. Use of a structural component according to one of the preceding claims for a primary structure of an aircraft fuselage, such as, for example, an aircraft door (10), an access hatch or a cargo door.

## Revendications

1. Elément de structure (1, 1) destiné à être utilisé dans des structures d'aéronautique, dans lequel il est prévu un panneau de paroi (2, 2') de grande surface qui présente des éléments de rigidification (3, 5 ; 3', 5') et se compose d'une structure moulée de grande surface, **caractérisé par le fait que** les éléments de rigidification sont conformés en éléments de rigidification de panneau de paroi (3, 3') et en éléments de rigidification de structure (5, 5'), les éléments de rigidification de panneau de paroi (3, 3') formant une première structure de rigidification, les éléments de rigidification de structure (5, 5') formant une deuxième structure de rigidification et une paroi intérieure (7, 7') étant disposée sur la deuxième structure de rigidification (5, 5'), les éléments de rigidification de panneau de paroi (3, 3') présentant une hauteur plus faible que les éléments de rigidification de structure (5, 5').

2. Elément de structure selon la revendication 1, **caractérisé par le fait que** le panneau de paroi (2, 2') de grande surface forme une paroi extérieure.

3. Elément de structure selon une des revendications 1 ou 2, **caractérisé par le fait que** l'élément de structure (1, 1') présente une forme courbe faiblement convexe, qui correspond au rayon de courbure d'un fuselage d'avion et peut être utilisé comme élément de construction d'avion soumis à une pression intérieure.

4. Elément de structure selon une des revendications 1 à 3, **caractérisé par le fait qu'**il est prévu des nervures de rigidification comme éléments de rigidification de structure (5, 5').

5. Elément de structure selon une des revendications 1 à 4, **caractérisé par le fait qu'**il est prévu des évidements (6, 8 ; 6', 8') dans les nervures de rigidification et/ou dans la paroi intérieure (7, 7').

6. Elément de structure selon la revendication 5, **caractérisé par le fait que** des moyens de rigidification (6A, 8A ; 6A', 8A') sont disposés sur les bords des évidements (6, 8 ; 6', 8').

7. Elément de structure selon une des revendications 1 à 6, **caractérisé par le fait que** les éléments de rigidification (3, 5 ; 3', 5') sont disposés sur le panneau de paroi (2) d'une manière telle qu'ils forment des rectangles disposés régulièrement les uns à côté des autres, qui dessinent une structure de rectangles.

8. Elément de structure selon une des revendications 1 à 6, **caractérisé par le fait que** les éléments de rigidification (3, 5 ; 3', 5') sont disposés sur le panneau de paroi (2) d'une manière telle qu'ils forment plusieurs surfaces hexagonales disposées les unes à côté des autres, qui dessinent une structure en nid d'abeilles.

9. Elément de structure selon une des revendications 1 à 6, **caractérisé par le fait que** les éléments de rigidification (3, 5 ; 3', 5') sont disposés sur le panneau de paroi (2) d'une manière telle qu'ils forment des carrés disposées les uns à côté des autres, qui dessinent une structure de losanges.

10. Elément de structure selon une des revendications 1 à 6, **caractérisé par le fait que** les éléments de rigidification (3, 5 ; 3', 5') sont disposés sur le panneau de paroi (2) d'une manière telle qu'ils forment des polygones disposées les uns à côté des autres..

11. Elément de structure selon une des revendications 1 à 10, **caractérisé par le fait que** la structure de rigidification (3, 5 ; 3', 5') dans la région du bord extérieur de l'élément de structure (1) comporte des points d'application d'eforts (13).

12. Elément de structure selon une des revendications 1 à 11, **caractérisé par le fait qu'**il est prévu dans la structure moulée (1, 1') au moins un évidement (11, 12) et/ou au moins un boîtier (16) pour d'autres éléments de construction.

13. Elément de structure selon une des revendications 1 à 12, **caractérisé par le fait que** la structure moulée (1, 1') est conformée en élément moulé en sable, en élément moulé fin ou en élément moulé par injection.

14. Elément de structure selon une des revendications précédentes, **caractérisé par le fait que** la structure moulée (1, 1') est réalisée en alliage de métal léger.

15. Utilisation d'un élément de structure selon une des revendications précédentes pour une structure primaire d'un fuselage d'avion, tel que par exemple une porte d'avion (10), une trappe d'accès ou une porte de soute à bagages.
